(19) Europäisches Patentamt
European Patent Office
Office européen des brevets

(11) **EP 4 032 473 A1**

(12) **EUROPEAN PATENT APPLICATION**
published in accordance with Art. 153(4) EPC

(43) Date of publication:
**27.07.2022 Bulletin 2022/30**

(51) International Patent Classification (IPC):
**A61B 5/16** (2006.01)          **G06F 40/279** (2020.01)

(21) Application number: **19946001.5**

(22) Date of filing: **19.09.2019**

(86) International application number:
**PCT/RU2019/000647**

(87) International publication number:
**WO 2021/054852 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2019 RU 2019129311**

(71) Applicant: **Joint-Stock Company "Neurotrend"
Moskovskaya obl., 121205 (RU)**

(72) Inventors:
• **ANISIMOV, Viktor Nikolaevich
Moscow, 125047 (RU)**
• **LUZHIN, Aleksandr Olgerdovich
Moscow, 123022 (RU)**

(74) Representative: **Spengler, Robert
Potthast & Spengler
Patentanwälte PartG mbB
Magirus-Deutz-Straße 12
89077 Ulm (DE)**

(54) **METHOD FOR DETERMINING THE EFFECTIVENESS OF THE VISUAL PRESENTATION OF TEXT-BASED MATERIALS**

(57)     The invention relates to the method of determination of effectiveness for specified text content presentation, that is: for several text contents, there will be measured the size and determined the linguistic complexity of them; for every specified presentation form of text content there will be determined the cognitive difficulty of perception; there will be generated data base for correlation of cognitive difficulty of perception to size and linguistic complexity for several text contents; for the specified text contents with specified presentation form, there will be determined the linguistic complexity and there will be determined the cognitive difficulty of perception for specified presentation form of specified text contents; there will be selected from data base the text contents that is closest to specified text contents by size and linguistic complexity, than there will be performed the comparison of cognitive difficulty of perception for the specified and chosen text contents, than there will be determined the effectiveness of presentation of the specified text contents by difference in cognitive difficulty of perception for the chosen and specified text contents, where the increased cognitive difficulty of perception for the specified text contents corresponds to relatively low presentation effectiveness for the specified text contents, whereas the decreased cognitive difficulty of perception for the specified text contents corresponds to relatively high presentation effectiveness for the specified text contents.

FIG. 1

**Description**

**Technical Field**

The invention belongs to the area of processing of information content which uses texts in natural languages; it may be used for appearance and presentation quality improvement of guidelines, study guides, promotional content and other information media, in studies of which the user required to comprehend the information presented.

**Prior Art**

Presently in the prior art there exists a need for improvement of information capacity of text content and acceleration of correct apprehension of text documents' content by users. For example, the patent claim WO2013016707 (published on 31.01.2013) describes the method for interactive presentation of text guidelines using the illustrating figures. Although this method shall be recognized as effective one, there exists a lack of objective tools for determination of effectiveness of technologies used for text presentation.

The proposed invention addresses the challenge of prior art and allows for objective estimation of effectiveness' determination for text content presentation. Direct analogies for the proposed invention has not been found, therefore as the closest analogue for the invention there chosen the solution disclosed in patent RU2571373 (published on 20.12.2015) where informational text in natural language is made subject to lexical analysis, based on the results of which there is may be reasonably to conclude on text impact for users: for example, to determine the psychological climate at users community where the text messages were formed.

**Summary of Invention**

The technical result that will be delivered with the use of invention will consist in ability of optimal structure's generation for presentation of information texts that would prompt users for specific actions, and in making possible the re-structuring of texts allowing for increase in their informational capacity.

According to one implementation variant, there offered the method of determination of effectiveness for specified text content presentation, that is: for several text contents, there will be measured the size and determined the linguistic complexity of them; for every specified presentation form of text content there will be determined the cognitive difficulty of perception; there will be generated data base for correlation of cognitive difficulty of perception to size and linguistic complexity for several text contents; for the specified text contents with specified presentation form, there will be determined the linguistic complexity and there will be determined the cognitive difficulty of perception for specified presentation form of specified text contents; there will be selected from data base the text contents that is closest to specified text contents by size and linguistic complexity, than there will be performed the comparison of cognitive difficulty of perception for the specified and chosen text contents, than there will be determined the effectiveness of presentation of the specified text contents by difference in cognitive difficulty of perception for the chosen and specified text contents, where the increased cognitive difficulty of perception for the specified text contents corresponds to relatively low presentation effectiveness for the specified text contents, whereas the decreased cognitive difficulty of perception for the specified text contents corresponds to relatively high presentation effectiveness for the specified text contents.

In one particular implementation variant, at low presentation effectiveness for the specified text contents, there will be changed the presentation form of text content up to rendering of the cognitive difficulty of perception for the specified text contents to the cognitive difficulty of perception for the chosen text contents.

In one particular implementation variant, at significantly high relative effectiveness of specified text contents there will be changed the lexical structure of the specified text contents according to specified presentation form of the specified text contents.

In one particular implementation variant, the linguistic complexity of the text contents will be determined via such adapted for Russian language methods (applied individually or in combination): method for complexity calculation via Flesch-Kincaid test as total of product of sentence's average length by coefficient that is 0.318, and product of syllables' average number by coefficient that is 14.2, with coefficient that is 30.5 deducted from this total; method for complexity calculation via Coleman-Liau test that is the remainder of product of alphabetic characters' average number per one hundred words by coefficient that is 0.055, and product of sentences' average number per one hundred words by coefficient that is 0.35, with coefficient that is 20.33 deducted from this remainder; method for complexity calculation via SMOG formula that is the total of coefficient that is 0.05 and product of coefficient that is 1.1 by quadratic root from product of multi-syllable words number by quotient of coefficient that is 64.6 and sentences number where multi-syllable words contains three and more syllables; method for complexity calculation via Dale-Chall formula that is the total of product of coefficient that is 0.552 by quotient of multi-syllable words number and total word number and product of coefficient that is 0.273 by quotient of total word number and total sentences number; method for complexity calculation using calculation of automated readability index that is the total of quotient of alphabetic characters and digits' number in text and words number in text, multiplied by coefficient that is 6.26, and quotient of words number in text and sentences number in text, multiplied by coefficient that is 0.28.

In one particular implementation variant, the text content's linguistic complexity will be calculated as arithmetical average of Flesch-Kincaid index, Coleman-Liau index, SMOG (Simple Measure of Gobbledygook) index, Dale-Chall index and automated readability index.

In one particular implementation variant, to determine the value of cognitive difficulty of perception there will be provided the observation of the user's view direction in relation to consequently located text areas, whereas the value of cognitive difficulty of perception will be determined as the number of user's eyes return movements from text areas located later in text to text areas located earlier in text, for the time from the start 'till the end of reading the text by the user.

In one particular implementation variant, there will be improved the value of cognitive difficulty of perception via division of the number of return movements to the number of fixations where fixation is fixing of the user's eyes on text content areas.

In one particular implementation variant, the data base will be updated with the properties of the users bearing the relationship with cognitive difficulty of perception.

In one particular implementation variant, the properties of the users bearing the relationship with the level of cognitive difficulty of perception are users' education level or education specialization.

In one particular implementation variant, there will be chosen additionally from the data base the text content that is closest to specified text content by the size and other linguistic complexity, to verify the correctness of effectiveness' determination for the specified text contents via comparison of cognitive difficulty of perception for the specified and additionally chosen text contents where the matching of change direction for cognitive difficulty of perception and linguistic complexity will be the evidence of the correctness of the presentation effectiveness' determination.

In one particular implementation variant, text content will be promotional text content.

In one particular implementation variant, there will be generated the list of questions that will allow determining the level of text comprehension by test person; upon non-achievement of required level of text's comprehension the test person will be excluded from the test program.

## Brief Description of Drawings

Fig. 1 shows the sample variant for implementation of this invention;
Fig. 2 shows the variant of comparison diagrams for readability, test question results and reading difficulty for the tests;
Fig. 3 shows the variant of comparison diagrams for readability, test question results and reading difficulty for the tests with mismatches;
Fig. 4 shows an example of computer system that is suitable for implementation of the proposed invention elements;
Fig. 5 shows the simplified example for the hardware implementation of proposed invention.

## Description of Embodiments of Invention

Objects and aspects of this invention, the approaches used to reach these objects and aspects, shall be clear by reference to sample implementation variants. However this invention is not limited to the sample implementation variants disclosed below; it also may be implemented via different variants. The essence presented in description is neither more nor less that specific details provided for the technical specialists in order to support the comprehensive understanding of invention; this invention identifies in enclosed formula's scope only.

The terms "module", "component", "element", "part", "integrated part" and similar used in this Description, are used for identification of computer entities that may be the hardware (for example, the device, or device's part, in particular, including at least one processor, microchip, etc.), or the software (for example, computer program, firmware, etc.) that allows the hardware of the computing system to perform calculations or control functions that are combination of instructions and data.

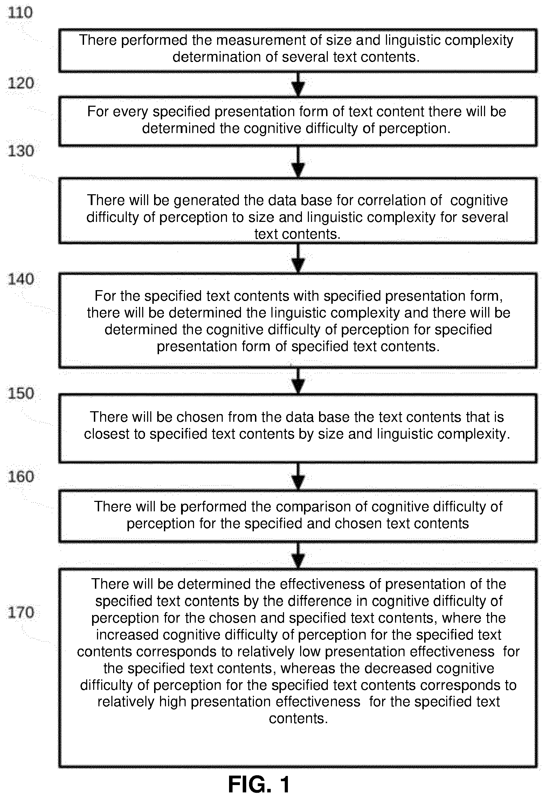

The FIG. 1 shows the sample variant for implementation of this invention.

To determine the effectiveness of visual presentation of the text content, in the proposed invention there calculated the cognitive difficulty and linguistic complexity of the text content.

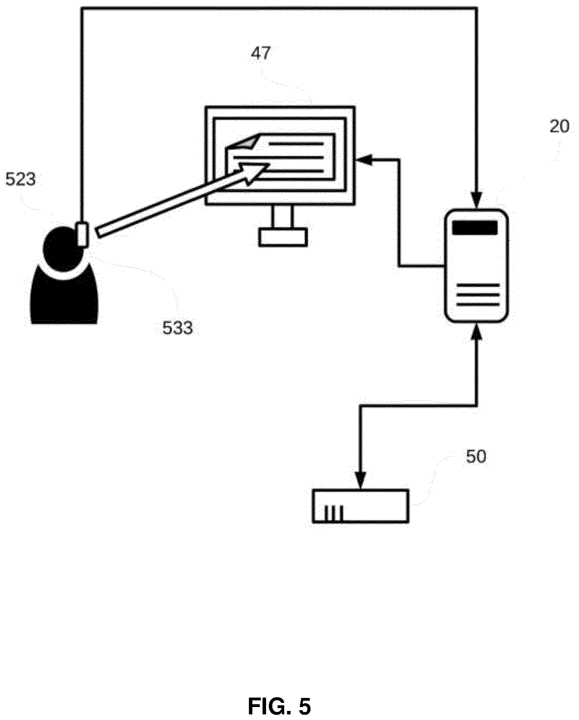

The cognitive difficulty is the users' 523 (FIG. 5) subjective attitude towards text. Thus, users' 523 (FIG. 5) text apprehensions are subject to impact of specific user's set of features: for example, educational level of the user 523 (FIG. 5), his age, personality psychological measures, functional state, attention measures and a whole set of other features. Such features will be reflected as user's 523 (FIG. 5) psychophysiological reactions that may be registered with oculography tools (eye tracking) as described in scope of this invention.

Text's linguistic complexity is the one of parameters that is responsible for the cognitive difficulty, and may be calculated independently of cognitive difficulty.

At present there is known the methods, formulas and indexes for calculation of coefficients of text's linguistic complexity, inter alia for texts in Russian language. They are based mostly on quantitative measures related to average length of sentences, number of syllables in word, multi-syllables ratio, representing the linear regression model.

As shown on FIG. 1, at step 110 there performed the measurement of size and linguistic complexity determination of several text contents.

The linguistic complexity is the objective parameter that is independent from features of specific user 523 (FIG. 5) who reads the text content presented to him. The linguistic complexity belongs to text content's linguistic features exclusively and at the up-to-date level of development of automatic calculation methods of this parameter may be calculated without of respondents' participation. Several decades ago there was proved by Y.A Mick the high correlation between content comprehension level and text's linguistic complexity (for English language). From the position of mechanical estimate of text's apprehension and comprehension the linguistic complexity is the most complex and information-rich parameter; it was verified during the tests performed on example usage of commercial texts that may be occurred in current promotional materials, in particular, in promotional texts contents that are presented to the user 523 (FIG. 5).

In particular case the linguistic complexity of text content, inter alia at least for the one specified content (for example, for promotional content) may be determined with different methods (for example, the ones that presented below), particularly adapted for the Russian language.

One of the aforementioned methods is the method of calculation of complexity with Flesch-Kinkaid Readability Test that was initially based on Rudolph Flesch test for complexity estimation of texts in English and was later improved by Peter Kinkaid. This test is based on thesis: the lesser words number in sentences and the shorter the words itself, the simpler is the text. The complexity (particularly, readability index, aka complexity index) according to Flesch-Kinkaid will be calculated as total of product of sentence's average length by coefficient that is 0.39, and product of syllables' average number by coefficient that is 11.8, with coefficient that is 15.59. The coefficient values listed are used to calculate index for texts in English. For texts in Russian the readability index according to Flesch-Kinkaid will be the total of product of sentence's average length by coefficient that is 0.318, and product of syllables' average number by coefficient that is 14.2, with coefficient that is 30.5 deducted from this total. Thus, the index will be calculated via formula:

$$0.318 * ASL + 14.2 * ASW - 30.5,$$

where

ASL - sentence's average length (words number divided by sentences number);
ASW - syllables' average number for words (syllables number divided by words number).

The coefficient values will be chosen a posteriori.

The next method is the method of calculation of complexity with Coleman-Liau Readability Test that was developed by M. Coleman and T.L. Liau for the simple and mechanical estimation of texts complexity. Index according to Coleman-Liau will be calculated as the remainder of product of alphabetic characters' average number per one hundred words by coefficient that is 0.0588, and product of sentences' average number per one hundred words by coefficient that is 0.296, with coefficient that is 15.8 deducted from this remainder. The coefficient values listed are used to calculate index for texts in English. For texts in Russian the readability index according to Coleman-Liau will be calculated as the remainder of product of alphabetic characters' average number per one hundred words by coefficient that is 0.055, and product of sentences' average number per one hundred words by coefficient that is 0.35, with coefficient that is 20.33 deducted from this remainder, i.e. via formula:

$$CLI=0.055*L-0.35*S-20.33,$$

where:

L - characters' average number per 100 words,
S - sentences' average number per 100 words.

Another method for complexity calculation is the method of complexity calculation via SMOG (Simple Measure of Gobbledygook) formula that was developed by Harry McLaughlin as more accurate and easier to calculate substitute for Gunning fog-index. In this case the complexity calculation is influenced by the number of multi-syllables, i.e. the more complex is the word, the more number of syllables. This method is often used in medicine. In this method the index will be calculated as the total of coefficient that is 3,1291and product of coefficient that is 1,0430 by quadratic root from product of multi-syllable words number by quotient of coefficient that is 30. The coefficient values listed are used to calculate index for texts in English. For texts in Russian the index will be calculated as the total of coefficient that is 0.05 and product of coefficient that is 1.1 by quadratic root from product of multi-syllable words number by quotient of coefficient that is 64.6 and sentences number where multi-syllable words contains three and more syllables, i.e. via formula:

$$1.1 \sqrt{KMC * \frac{64.6}{K\Pi}} + 0.05$$

,

where:

KMC - multi-syllable words number;
$K\Pi$ - sentences number.

Another of aforementioned methods is the complexity calculation method via Dale-Chale readability formula developed on the base of the 763 words list containing 80 percent of words that are known to fourth-grade schoolchildren, thus finding out the complex words. The formula was updated with extension of the list up to 3000 known words. Considering the specific character of this estimate it is used chiefly, for estimation of the texts intended for schoolchildren from fourth grade onwards. In this method the index will be calculated as the total of product of coefficient that is 1.1579 by quotient of multi-syllable words number (KMC) and total word number (in particular, $WORDS_{TOTAL}$) and product of coefficient that is 0.0496 by quotient of total word number and total sentences number (in particular, $SENTENCES_{TOTAL}$). The coefficient values listed are used to calculate index for texts in English. For texts in Russian the index will be calculated as the total of product of coefficient that is 0.552 by quotient of multi-syllable words number and total word number and product of coefficient that is 0.273 by quotient of total word number and total sentences number i.e. by formula:

$$0.552 * \left(\frac{KMC}{\text{СЛОВ}_{\text{всего}}}\right) + 0.273 * \left(\frac{\text{СЛОВ}_{\text{всего}}}{\text{ПРЕДЛОЖЕНИЙ}_{\text{всего}}}\right)$$

where:

KMC - multi-syllable words number
$\text{СЛОВ}_{\text{всего}}$ = $WORDS_{TOTAL}$
$\text{ПРЕДЛОЖЕНИЙ}_{\text{всего}}$ = $SENTENCES_{TOTAL}$

Also, one of the earlier mentioned methods is the complexity calculation method using the calculation of Automated Readability Index. This index designed for text's apprehensibility estimation. In its base, as in Coleman-Liau formula, there lays the number of alphabetical characters that is affecting the complexity estimation. In this method the index will be calculated as the total of quotient of alphabetic characters and digits' number in text and words number in text, multiplied by coefficient that is 4.71, and quotient of words number in text and sentences number in text, multiplied by coefficient that is 0.5. The coefficient values listed are used to calculate index for texts in English. For texts in Russian the index will be calculated as the total of quotient of alphabetic characters and digits number in text and word number in text, multiplied by coefficient that is 6.26, and quotient of words number in text and sentences number in text, multiplied by coefficient that is 0.28, i.e. by formula:

$$6.26 * \frac{C}{W} + 0.28 * \frac{W}{S},$$

where:

C - alphabetic characters and digits' number in text,
W - words number in text,
S - sentences number in text.

In scope of implementation of this invention, from the set of criteria (particularly, indexes) there will be generated the composite index that is the summary characteristic which is the one value describing the possible complexity of potentially readable text for the consumer. In particular, the linguistic complexity will be verified via calculation of the average value from the set of indexes, i.e. the linguistic complexity will be calculated as the total of Flesch-Kincaid index, Coleman-Liau index, SMOG index, Dale-Chall index and automated readability index, divided by the number of indexes (that is, by 5).

However in some circumstances the behavioral aspects (reading strategies, user attention allocation and several other individual features) are critically impacts on the reading and apprehension of the text viewed (read) by user 523 (FIG. 5). Whereupon the cognitive difficulty parameter (particularly, the proportion of eyes return movements, regressions, from the total number of number of fixations performed on text) will disperse from the linguistic complexity parameter.

At the step 120 for every specified presentation form of text content there will be determined the cognitive difficulty of perception.

The cognitive difficulty (cognitive difficulty of reading, cognitive difficulty of perception) will determine the effectiveness of text comprehension by user 523 (FIG. 5) and text learning in real conditions of its reading.

In particular case, to determine the value of cognitive difficulty of perception there will be performed the observation of the user's 523 (FIG. 5) view direction in relation to consequently located text areas. The value of cognitive difficulty of perception will be determined as the number of user's 523 (FIG. 5) eyes return movements from later located areas to earlier located areas for the time from the start 'till the end of reading the text by the user 523 (FIG. 5).

In particular case, there will be improved the value of cognitive difficulty of perception via division of the number of return movements to the number of fixations where fixation is fixing of the user's eyes on text content areas, particularly on text content elements, for example on word, word part, word combination, adjacent words etc. These fixations (of user's eyes to text content elements) will be registered and processed by device 533 registering the user's view direction, and computer 20; particularly there will be registered and processed user's view direction to text content elements and the time during which user's eyes were directed on such text content elements. Thus, if the user during reading text content views longer some specific text elements, such delay of user's glance at text elements will be registered and processed storing in computer 20 and/or at device 533 registering the user's view direction such parts of text content and/or their coordinates (corresponding to text content elements allocation) where user's glance was directed. The storage of the data mentioned may be performed at one data storage or at least at one data base integrated or linked with the computer 20 and/or device 533 registering the user's view direction. The duration of user's view delay on text elements to determine the fixation fact will be defined by operator on computer, for example, in fixation duration setting module, in data processing and analysis module or in registered data processing module of the computer 20. Particularly, for normalizing there will be used the division by fixations number, allowing the comparison of the texts with different size. Since the reader have no ability to not perform fixations during reading, during the reading of the texts with bigger size there will be performed more fixations. As a rule, for bigger texts there always registered more return movements (wandering) regardless of text complexity (not only due its complexity). Division by fixations number allows avoiding this constraint. Besides since the number of return movements and fixations are relating to one user 523 (FIG. 5) it allows avoiding the individual factor's impact.

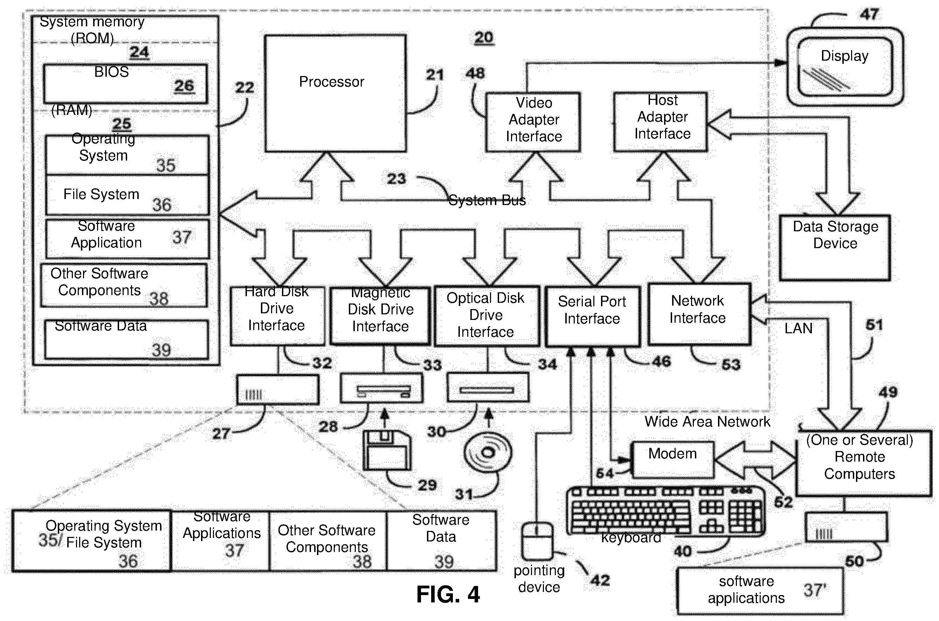

To determine user's 523 (FIG. 5) view direction, particularly, user's 523 (FIG. 5) glance coordinates, there will be used corresponding device 533 (FIG. 5) registering the user's view direction and connected with computing device, for example computer 20 (FIG. 4) that will perform processing of the received data. The use of such devices 533 (FIG. 5) registering the user's view direction as "video-oculograph", "eye-tracker" allows for registration of the point or area where the glance of the user 523 (FIG. 5) is presently directed, also registration of previous directions of the user's 523 (FIG. 5) glance during reading of the text content presented to him. Hence such device at least tracks the glance path of motion during reading of text content presented to the user 523 (FIG. 5). Also such devices allows for registration of user's 523 (FIG. 5) glance fixations at individual points of presented text content, particularly at the areas of presented text content, for example, at words, words parts etc.

So, the user 523 (FIG. 5) will be presented with text content including for example promotional content for some product, service etc. Text content presentation to the user 523 (FIG. 5) may be performed via information visualization tools, for example, with display 47 (FIG. 4) connected to computer 20 (FIG. 4) that contains the text content to be presented. Also, text content presentation to the user 523 (FIG. 5) may be performed via putting before him the text content, for example printed on paper sheets, displayed on screen via projector apparatus etc. or any other known method of visual information presentation to the user 523 (FIG. 5).

After text content was presented to the user 523 (FIG. 5) and upon beginning of reading the presented text by the user 523 (FIG. 5) there will be performed registration of the moments of the times of starting and stopping the reading of the text content by user 523 (FIG. 5) via computer 20 (FIG. 4) and device 533 (FIG. 5) for registering user's 523 (FIG. 5) view direction. Reading start time may be the moment of starting of material presentation to user 523 (FIG. 5), and reading stop time may be the moment of stopping the material presentation to user 523 (FIG. 5), i.e. for example the moment of putting the material out of the user's 523 (FIG. 5) view area. Also, reading start time may be the registered moment of time when user 523 (FIG. 5) moved his glance to the presented material or started to move his glance from the earlier located areas of text to later located areas, for example, from the first text word to the second, etc. Also, reading stop time may be the registered moment of time when user 523 (FIG. 5) moved his glance out of the borders of text presented, for example, beyond the sheet (or display screen, etc.) borders, inter alia for the specified period of time, for example, for 2 seconds, 5 seconds etc.

The return movements of user's 523 (FIG. 5) eyes from later located text areas to earlier located text areas during time period from start to stop moments of reading the text by user 523 (FIG. 5) will be registered by device 533 (FIG. 5) registering user view direction and will be transferred to computer 20 (FIG. 4), for example, in the form of coordinates. The device 533 (FIG. 5) registering user view direction will determine and store to information (data) storage device 50 (FIG. 4) the coordinates of user's 523 (FIG. 5) view direction for every moment, with corresponding to such coordinates time marks for subsequent processing. The registered coordinates of user's 523 (FIG. 5) view direction will be transferred to computer 20 for subsequent processing as described in scope of this invention.

At the step 130 there will be generated the data base for correlation of cognitive difficulty of perception to size and linguistic complexity for several text contents. In particular case there will be performed the update of the data base with users' properties relating to the level of cognitive difficulty of perception, for example, education level and education specialization. The mentioned generated and updated data base will be stored at information storage device 50 (FIG. 4) of computer 20 (FIG. 4), for example, at hard disk drive 27 (FIG. 4). The mentioned data base update with users' properties may be performed by users, for example, by respondents performing the reading of the presented materials, or by operators responsible for presentation of text contents to the user 523 (FIG. 5), system maintenance etc. User's 523 (FIG. 5) properties may be received during users' questionnaire survey process with computer 20 (FIG. 4), at the display 47 (FIG. 4) of which there will be presented the questionnaire's questions that will be answered by user 523 (FIG. 5) with data entering device connected to computer 20 (FIG. 4). The mentioned data base will be stored at information (data) storage device 50 (FIG. 4).

In particular case before starting the presentation of text content, the user must fill the questionnaire with his name, surname, father's name, gender, dominant arm, dominant eye, age, education, economic realm of current job (if hired), marital status, existence and number of children, financial standing etc. User may fill the questionnaire, for example, via computer 20 (FIG. 4), or in written form, whereby the resulting questionnaire may be processed via computer 20 (FIG. 4), for example, via scanning the written users' questionnaires, adding the questionnaire results to data base, inter alia by operator using the computer 20 (FIG. 4) and devices connected with it.

At the step 140 for the specified text contents with specified presentation form, there will be determined linguistic complexity and there will be determined the cognitive difficulty of perception for specified presentation form of specified text contents. So there will be performed the presentation to the user (respondent) 523 (FIG. 5) of the text content, with determination of linguistic complexity and determination of cognitive difficulty as described in scope of this invention, inter alia using at least computer 20 (FIG. 4) and device 533 (FIG. 5) registering user view direction. So during the user's reading process there will be calculated the difficulty index based on regression share such as: from the data flow received from computer 20 (FIG. 4) and device 533 (FIG. 5) registering user view direction there will be extracted the events - fixations, their number, there will be automatically determined the regressions, i.e. return movements of the user's 523 (FIG. 5) eyes, and there will be calculated the ratio of regressions to total number of fixations during text content reading. In particular case, regression criteria is the registered decrease of coordinate at horizontal axe within one line.

At the step 150 there will be chosen from the data base the text contents that are closest to specified text contents by size and linguistic complexity. So, the operator using computer 20 (FIG. 4) or in automatic mode, particularly, the computer 20 (FIG. 4), inter alia upon parameters specified by operator, will perform data base search for the specified text contents that are closest to specified text contents by size and linguistic complexity.

At the step 160 there will be performed the comparison of cognitive difficulty of perception for the specified and chosen text contents. So the operator using computer 20 (FIG. 4) or the computer 20 (FIG. 4) with installed software, inter alia upon parameters specified by operator, will perform the comparison of the specified text content with the material chosen earlier.

At the step 170 there will be determined the effectiveness of presentation of the specified text contents by the difference in cognitive difficulty of perception for the chosen and specified text contents. The increased cognitive difficulty of perception for the specified text contents corresponds to relatively low presentation effectiveness for the specified text contents, whereas the decreased cognitive difficulty of perception for the specified text contents corresponds to relatively high presentation effectiveness for the specified text contents.

In particular case, at low presentation effectiveness for the specified text contents, there will be changed the presentation form of promotional text content up to rendering of the cognitive difficulty of perception for the specified text contents to the cognitive difficulty of perception for the chosen promotional text content.

In particular case, at significantly high relative effectiveness of specified text contents there will be changed the lexical structure of the specified text contents according to specified presentation form of the specified text content. This approach allows preventing the abuse when publicity agency generates text with complex sentences but the promotional poster contains the text divided to simple sentences.

In particular case, after determination of presentation effectiveness, there will be chosen additionally from the data base the text content that is closest to specified text content by the size and other linguistic complexity, to verify the correctness of effectiveness' determination for the specified text contents via comparison of cognitive difficulty of perception for the specified and additionally chosen text contents. The matching of change direction for cognitive difficulty of perception and linguistic complexity will be the evidence of the correctness of the presentation effectiveness' determination.

Also, in one particular case, there will be generated the list of questions that will allow determining the level of text comprehension by user (test person) 523 (FIG. 5); upon non-achievement of required level of text comprehension the test person will be excluded from the test program.

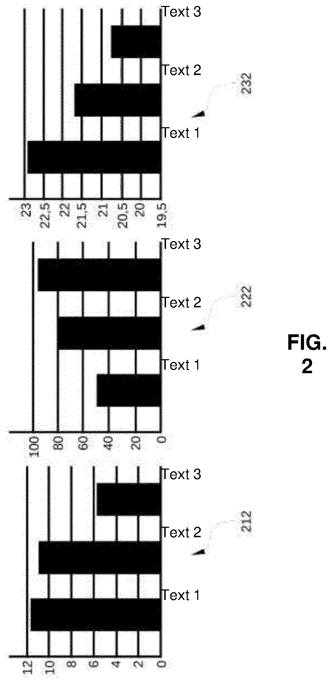

In particular case there will be determined the existence of correlation of gradations of linguistic complexity and cognitive difficulty for several text contents that is to determine, if more complex test also is more difficult text? If there is no dispersion, the dynamics of one parameter shall repeat the dynamics of other parameter as shown on FIG. 2.

At FIG. 2 there shown an example of comparison diagrams for readability 212, test questions results 222 and reading difficulty (neuro-metrics) 232 for three tests ("Text 1", "Text 2" and "Text 3").

As shown on FIG. 2, the more complex texts are the more difficult in described terminology. Test questions results 222, particularly, the verifying answers to sociological questionnaire, are the evidence that the sequence is made from difficult to simple.

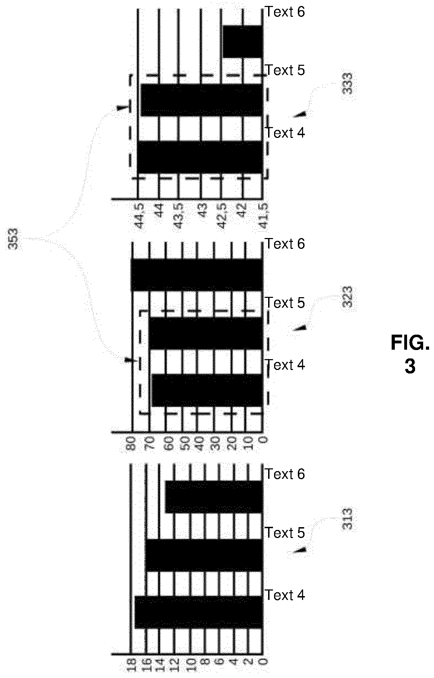

At FIG. 3 there shown an example of comparison diagrams for readability 313, test questions results 323 and reading difficulty (neuro-metrics) 333 for three tests ("Text 4", "Text 5" and "Text 6") with mismatches (353).

As shown on FIG. 3, the complexity sequence will be built appropriately, but the difficulty (on the right) is not showing differences of "Text 4" and "Text 5" anymore. In this case this is the reason to pay attention to special aspects of text presentation for this particular text content (particularly, in this specific promotional text), text disposition, font, background, and to perform the correcting on its presentation, particularly, in its presentation form. It may be connected with aspects of user (or users) for whom there were received the data (target group matching etc.).

Since for different users' aspects comparison there must some reference value, for evaluation target value of cognitive difficulty (regression ratio) there may be taken the reference value's fluctuation band for statistically-average user (big city dweller, average productive age, standard revenue level), calculated for the data of the data base, collected from all respondents who read text content presented to them. In this case there may be realized an opportunity to perform comparison with baseline describing the average norm-based index of regression ratio. Fluctuation band's borders may be the standard deviations, or the higher and lower quartiles of index distribution.

At FIG. 4 there show an example of computing system suitable for implementation of the proposed invention's elements, which includes multifunctional computing device - the computer 20 or server, or the module of the system described in present invention, including processor 21, system memory 22 and system bus 23 that connects different system's components, including the system memory with processor 21.

The system bus 23 may be of any type bus structures that include memory bus or memory controller, peripheral bus and local bus, using any of many bus architectures. The system memory includes read-only memory (ROM) 24 and random-access memory (RAM) 25. At ROM 24 there stored the base system for input/output 26 (BIOS), consisting of main subprograms helping the informational exchange between elements inside computer 20, for example, during starting-up.

Computer 20 also may include hard-disk drive 27 for reading and recording to hard disk (not shown), magnetic disk drive 28 for reading and recording to removable magnetic disk 29, and optical disk drive 30 for reading and recording to removable optical disk 31 such as compact-disk, digital video disk and other optical devices. Hard-disk drive 27, magnetic disk drive 28 and optical disc drive 30 are connected with system bus 23 via, correspondingly, hard disc drive interface 32, magnetic disk drive interface 33 and optical disc drive interface 34. Drives and their corresponding computer-readable tools are providing non-volatile storage of computer-readable instructions, data structures, program modules and other data for computer 20.

Although the typical configuration described here uses hard disk, removable magnetic disk 29 and removable optical disk 31, specialist shall pay attention to the fact that at standard operational infrastructure there may be also used other types of computer-readable devices that may store the data that available from computer, such as flash memory cards, random-access memory (RAM) devices, read-only memory (ROM) devices, and other types.

Different program modules, including operational system 35, may be stored at hard disk, magnetic disk 29, optical disk 31, ROM 24 or RAM 25. The computer 20 includes file system 36, connected with operation system 35 or integrated in it, one or more software application 37, other software modules 38 and software data 39. User 523 (FIG. 5) may enter commands and information to computer 20 via input devices such as keyboard 40 and pointing devices 42. Other input devices (not shown) may include microphone, joystick, gamepad, satellite antenna, scanner or any other device.

These and other input devices are connected with processor 21 often via serial port interface 46 connected to system bus, but also may be connected via other interfaces such as parallel port, game port or universal serial bus (USB). Display 47 (or other type of visual display unit) also connected to system bus 23 via interface, for example, video adapter 48. In addition to monitor 47, a personal computer usually includes other peripheral devices for output (not shown) such as speakers and printers.

Computer 20 may function in networking environment via logical connections to one or several remote computers 49. Remote computer (or computers) 49 may be other computer, server, router, network PC, peer-to-peer device or other node of single network, and usually includes the majority or all elements described above, relating to computer 20, although there shown the information (data) storage device 50 only. A logical connection includes local area network (LAN) 51 and wide area network (WAN) 52. Such network environments are commonly used at enterprises, corporate computer networks and Internet.

Computer 20 used in LAN network environment, connects to local network 51 via network interface or adapter 53. Computer 20 used in WAN network environment, usually uses the modem 54 or other tolls for connection to wide area network 52 such as Internet.

Modem 54 that may be integrated or external, is connected with system bus 23 via serial port interface 46. At network environment the software modules or their parts described in relation to computer 20, may be stored at a remote information storage device. Please note that the network connections shown are typical; to create the communication connection between computers there may be used other tools.

At FIG. 5 there shown the simplified example of hardware implementation of the proposed invention.

The hardware shown on FIG. 5, in one particular case, is relating to one user 523, computer 20, device 533 registering user's view direction, display 47, but it must be understood that the hardware or local part of the system may be related to at least one other user. The number of users in the invention described and the number of the computers, tools, modules, displays etc. mentioned, in one particular case is not limited and depends on computer or any other part of the described system' rate (for example, when there is integrated, or connected, calculation devices, tools, modules etc. that allows connections between such devices, tools, modules etc.), with Internet network (system), data processing rate of the described devices, tools, modules, etc. and their other characteristics.

Text content may be presented to user 523 by computing device such as computer 20, for example, via their displaying at the screen of display 47 connected to computer 20. Text content may be presented to user 523 via content's visualization using, at least, devices that allow information visualization. Also, text content may be presented to user 523 using the known information media. Text content may be presented to user by text content presentation module integrated in computer 20. Parameters of text contents and their visualization such as for example the number of text content presented, their size, form, time for start and stop of presentation etc. shall be defined by text content presentation module. In one particular case, the input of the mentioned text content parameters may be performed at text content presentation module by operator, for example, via module for specifying of text content parameters that may be integrated in computer 20, submodule of text content presentation module, or may be connected with them via any known way. Text content presentation module also may perform data transfer to data processing and analysis module for subsequent processing. The data transferred may be the text content's specifications (parameters) that may be used by data processing and analysis module as described in scope of this invention.

During text content reading by user, particularly, during text content presentation to user 523, there performed the tracking of user's eyes direction via device 533 registering user's view direction. The way the user 523 reads the text content presented to him, is the oculomotor activity. User's 523 eyes movements are substantial index of special aspects of information cognitive processing by user 523, particularly, of information perception by user 523. In present invention there may be used the different types of devices 533 registering user's view direction, inter alia devices with mechanical contact to the eye, for example, contact lenses with integrated mirrors etc. Also, there may be used touchless methods (and, correspondingly, devices) for tracking user eye direction, for example, using infra-red high-lighting reflected by eye-ball and registered by optical sensor etc. Also there may be used the methods using measurements of electrical potentials from the electrodes located around the eyes of user 523. The device 533 registering user's view direction may be fixed at user's head or may be installed at close proximity of user 523, or at required (for precise registration of eye direction) distance, inter alia at display 47, computer 20, or may be integrated to them, etc.

The data received (particularly, in process of registration or registered) by device 533 registering user's view direction may be processed (fully or partially) either by computer 20, particularly, at least, by one of its modules, for example, by data processing and analysis module, or by device 533 registering user's view direction (or at least by one of its modules if the device (module, tool, etc.) 533 registering user's view direction allows such processing, for example, using at least one processor, microchip and controller, microcontroller etc.). Thus, before transfer to data processing and analysis module, the data registered by device 533 registering user's view direction may be preprocessed by device 533 registering user's view direction or at least by one of its parts, for example, by pre-processing module. In one particular case such pre-processing may be performed either by computer 20, for example, by data processing and analysis module and/or by other module, for example, by data pre-processing module integrated to computer 20.

The data registered by device 533 registering user's view direction are transferred to computer 20, inter alia after the pre-processing via device 533 registering user's view direction. The data registered by device 533 registering user's view direction are processed by computer 20, for example, by registered data processing module of computer 20. Such processing may include, at least, the calculation of user's view coordinates, their correlation with disposition of presented text contents' parts of presented text contents (particularly, with coordinates of the presented text contents' parts of presented text contents) etc.

Text content may be stored in computer 20 data base, for example, at data storage device 50, that may be integrated to computer 20 or may be connected to such computer 20, for example, via local area network, Internet, etc.

Also, at the data storage device 50 there may be stored the data base of matching of cognitive difficulty of perception to size and linguistic complexity for different text contents.

Also, data base may store users' properties, relevant to cognitive difficulty of perception's level, for example, education level or education specification.

The data base mentioned may be hierarchical, object, obj ect-oriented, document-oriented, object-relational, relational, network and/or functional data base, either of which may be centralized, centered, distributed, heterogeneous, homogenous, fragmented (sectioned), replicated, spatial, temporal, spatial-temporal, cyclic, extra-large data base etc., wherein for data base management, creation and operation there may be used different data base management systems (DBMS). In one particular case the data storage mentioned may be the temporary data storage device (for example, random access memory (RAM)), persistent data storage device (for example, (programmable) read-only memory (ROM or PROM), inter alia implemented with at least one microchip or chipset etc.). Also, data at data storage device may be stored as at least one file (in one particular case, as text file), or data may be stored in at least any one other presently known data (information) storage form, or in data form to be invented in future.

Computer 20 also may include the connected to, at least, registered data processing module, data processing and analysis module, which perform at least comparison of cognitive difficulty of the specified and chosen text contents, and effectiveness determination of specified text contents' presentation.

By means of integrated to device 533 registering user's view direction and/or in computer 20 processing and analysis elements (for example, employing the artificial intelligence structures), there implemented an option for processing and interpretation of registered data as described in scope of proposed invention.

The processing and analysis elements mentioned, inter alia artificial intelligence tools, may be implemented as the part of data processing and analysis module or as computer's 20 module connected with device 533 registering user's view direction or other module, for example, with computer 20 module. Data processing and analysis module or at least one of its parts may be integrated to device 533 registering user's view direction.

Also, computer 20 may include the data base selection module for text contents that are closest to specified text contents by size and linguistic complexity.

Also, computer 20 may include module for size measurement and linguistic complexity calculation of text contents, and module for determination of cognitive difficulty of perception for specified presentation forms of text contents.

Also, computer 20 may include module for generation of the list of questions allowing determination of user's text learning.

In one particular case, data registered processing module and/or data base selection module for text contents, that are closest to specified text contents by size and linguistic complexity, and/or module for size measurement and linguistic complexity calculation of text contents, and/or module for determination of cognitive difficulty of perception for specified presentation forms of text contents, and/or any other module and their complex may be the part of data processing and analysis module.

As can be seen from above, this invention proposes the compound method including linguistic and physiological approaches that mutually complements each other, allowing exclusion of traditional interrogatory sociological methods.

In summary, the information presented in this description is just an example set that is not restricting the scope of proposed invention defined by the formula. The person skilled in the art will clearly see that there exist other variants of implementation for the proposed invention consisting with the essence and scope of this invention.

**Claims**

1. The method of determination of effectiveness for specified text content presentation, that is:

   there will be measured the size and determined the linguistic complexity of several text contents;
   for every specified presentation form of text content there will be determined the cognitive difficulty of perception;
   there will be generated data base for correlation of cognitive difficulty of perception to size and linguistic complexity for several text contents;
   for the specified text contents with specified presentation form, there will be determined the linguistic complexity and there will be determined the cognitive difficulty of perception for the specified presentation form of specified text contents;
   there will be selected from data base the text contents that is closest to specified text contents by size and linguistic complexity,
   there will be performed the comparison of cognitive difficulty of perception for the specified and chosen text contents,
   and there will be determined the effectiveness of presentation of the specified text contents by difference in cognitive difficulty of perception for the chosen and specified text contents, where the increased cognitive difficulty of perception for the specified text contents corresponds to relatively low presentation effectiveness for the specified text contents, whereas the decreased cognitive difficulty of perception for the specified text contents corresponds to relatively high presentation effectiveness for the specified text contents.

2. Method of claim 1, **characterized in that**: at low presentation effectiveness for the specified text contents, there will be changed the presentation form of text content up to rendering of the cognitive difficulty of perception for the specified text contents to the cognitive difficulty of perception for the chosen text contents.

3. Method of claim 1, **characterized in that**: at significantly high relative effectiveness of specified text contents there will be changed the lexical structure of the specified text contents according to specified presentation form of the specified text contents.

4. Method of claim 1, **characterized in that**: the linguistic complexity of the text contents will be determined via such adapted for Russian language methods, applied individually or in combination:

   - method for complexity calculation via Flesch-Kincaid test as total of product of sentence's average length by coefficient that is 0.318, product of syllables' average number by coefficient that is 14.2, with coefficient that is 30.5 deducted from this total;
   - method for complexity calculation via Coleman-Liau test that is the remainder of product of alphabetic characters' average number per one hundred words by coefficient that is 0.055, and product of sentences' average number per one hundred words by coefficient that is 0.35, with coefficient that is 20.33 deducted from this remainder;
   - method for complexity calculation via SMOG formula that is the total of coefficient that is 0.05 and product of coefficient that is 1.1 by quadratic root from product of multi-syllable words number by quotient of coefficient that is 64.6 and sentences number where multi-syllable words contains three and more syllables;
   - method for complexity calculation via Dale-Chall formula that is the total of product of coefficient that is 0.552 by quotient of multi-syllable words number and total word number and product of coefficient that is 0.273 by quotient of total word number and total sentences number;
   - method for complexity calculation using calculation of automated readability index that is the total of quotient of alphabetic characters and digits' number in text and words number in text, multiplied by coefficient that is 6.26, and quotient of words number in text and sentences number in text, multiplied by coefficient that is 0.28.

5. Method of claim 4, **characterized in that**: the text content's linguistic complexity will be calculated as arithmetical average of Flesch-Kincaid index, Coleman-Liau index, SMOG (Simple Measure of Gobbledygook) index, Dale-Chall index and automated readability index.

6. Method of claim 1, **characterized in that**: to determine the value of cognitive difficulty of perception there will be provided the observation of the user's view direction in relation to consequently located text areas, whereas the value of cognitive difficulty of perception will be determined as the number of user's eyes return movements from text areas located later in text to text areas located earlier in text, for the time from the start 'till the end of reading the text by the user.

7. Method of claim 6, **characterized in that**: there will be improved the value of cognitive difficulty of perception via division of the number of return movements to the number of fixations where fixation is fixing of the user's eyes on text content areas.

8. Method of claim 1, **characterized in that**: the data base will be updated with the properties of the users bearing the relationship with cognitive difficulty of perception.

9. Method of claim 8, **characterized in that**: the properties of the users bearing the relationship with the level of cognitive difficulty of perception are users' education level or education specialization.

10. Method of claim 1, **characterized in that**: there will be chosen additionally from the data base the text content that is closest to specified text content by the size and other linguistic complexity, to verify the correctness of effectiveness' determination for the specified text contents via comparison of cognitive difficulty of perception for the specified and additionally chosen text contents where the matching of change direction for cognitive difficulty of perception and linguistic complexity will be the evidence of the correctness of the presentation effectiveness' determination.

11. Method of claim 1, **characterized in that**: text content will be promotional text content.

12. Method of any previously listed claim items, **characterized in that**: there will be generated the list of questions that will allow determining the level of text comprehension by test person; upon non-achievement of required level of text's comprehension the test person will be excluded from the test program.

110

> There performed the measurement of size and linguistic complexity determination of several text contents.

120

> For every specified presentation form of text content there will be determined the cognitive difficulty of perception.

130

> There will be generated the data base for correlation of cognitive difficulty of perception to size and linguistic complexity for several text contents.

140

> For the specified text contents with specified presentation form, there will be determined the linguistic complexity and there will be determined the cognitive difficulty of perception for specified presentation form of specified text contents.

150

> There will be chosen from the data base the text contents that is closest to specified text contents by size and linguistic complexity.

160

> There will be performed the comparison of cognitive difficulty of perception for the specified and chosen text contents

170

> There will be determined the effectiveness of presentation of the specified text contents by the difference in cognitive difficulty of perception for the chosen and specified text contents, where the increased cognitive difficulty of perception for the specified text contents corresponds to relatively low presentation effectiveness for the specified text contents, whereas the decreased cognitive difficulty of perception for the specified text contents corresponds to relatively high presentation effectiveness for the specified text contents.

## FIG. 1

FIG. 2

212

222

232

EP 4 032 473 A1

FIG. 3

15

FIG. 4

**FIG. 5**

## INTERNATIONAL SEARCH REPORT

| International application No. |
|---|
| PCT/RU 2019/000647 |

**A. CLASSIFICATION OF SUBJECT MATTER**

A61B 5/16 (2006.01)    G06F 40/279 (2020.01)

According to International Patent Classification (IPC) or to both national classification and IPC

**B. FIELDS SEARCHED**

Minimum documentation searched (classification system followed by classification symbols)

A61B G06F

Documentation searched other than minimum documentation to the extent that such documents are included in the fields searched

Electronic data base consulted during the international search (name of data base and, where practicable, search terms used)

PatSearch (RUPTO internal), USPTO, PAJ, K-PION, Esp@cenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | US 2016/0203726 A1 (QUANTUM APPLIED SCIENCE AND RESEARCH, INC.) 14.07.2016 | 1-12 |
| A | RU 2571373 C2 (OOO ABI INFOPOISK) 20.12.2015 | 1-12 |
| A | US 2015/0332596 A1 (JONES INTERNATIONAL, LTD.) 19.11.2015 | 1-12 |
| A | US 2016/0269555 A1 (INTERNATIONAL BUSINESS MACHINES CORPORATION) 15.09.2016 | 1-12 |
| A | WO 2015/027079 A1 (QUANTUM APPLIED SCIENCE AND RESEARCH, INC.) 26.02.2015 | 1-12 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 June 2020 (16.06.2020) | 18 June 2020 (18.06.2020) |

| Name and mailing address of the ISA/ | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013016707 A
- RU 2571373